(19) Europäisches Patentamt / European Patent Office / Office européen des brevets

(11) **EP 2 980 540 A1**

(12) **EUROPÄISCHE PATENTANMELDUNG**

(43) Veröffentlichungstag:
03.02.2016 Patentblatt 2016/05

(21) Anmeldenummer: 14179520.3

(22) Anmeldetag: 01.08.2014

(51) Int Cl.:
*G01F 23/288* (2006.01)     *G01T 1/17* (2006.01)
*G01F 1/704* (2006.01)     *G01F 1/712* (2006.01)
*G01N 23/08* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **VEGA Grieshaber KG**
**77709 Wolfach (DE)**

(72) Erfinder:
• **Fehrenbach, Josef**
**77716 Haslach (DE)**
• **Körnle, Ralf**
**77736 Zell a. H. (DE)**

(74) Vertreter: **Maiwald Patentanwalts GmbH**
**Elisenhof**
**Elisenstrasse 3**
**80335 München (DE)**

(54) **Signalabtastung bei einem radiometrischen Messsystem**

(57) Die Erfindung betrifft die Verbesserung des Messergebnisses eines radiometrischen Messgeräts, indem Pulsfolgen abgetastet, digitalisiert, gespeichert und dann kategorisiert werden. Eine Auswerteeinheit bestimmt beispielsweise die Form des von einem radiometrischen Detektor erzeugten elektrischen Pulses und vergleicht diese mit der Form eines Referenzpulses. Aus dem Unterschied zwischen diesen beiden Pulsen kann ein potenzieller Fehler bei der Messwertbestimmung identifiziert und durch Korrekturmaßnamen verhindert werden.

Fig. 3

EP 2 980 540 A1

**Beschreibung**

Gebiet der Erfindung

Die Erfindung betrifft die radiometrische Füllstandmessung, die radiometrische Dichtemessung, die radiometrische Grenzstandmessung und die radiometrische Durchsatzmessung. Insbesondere betrifft die Erfindung ein radiometrisches Messgerät, welches in der Lage ist, einen Messfehler zu kompensieren, sowie ein Verfahren zum Kompensieren eines Messfehlers eines radiometrischen Messgeräts, ein Programmelement und ein computerlesbares Medium.

Technologischer Hintergrund

Bei der radiometrischen Füllstand-, Grenzstand-, Dichte- oder Durchsatzmessung mit einem Szintillator erzeugt ein von einem radioaktiven Strahler durch das Füllgut gelangendes Gammaquant (oder eine andere radioaktive Strahlung) im Szintillator einen Lichtpuls. Dieser Lichtpuls wird dann zum Beispiel mithilfe eines Photomultipliers (PMT), einer Avalanche-Photodiode (APD) oder mithilfe eines Siliziumphotomultipliers (SPM) in elektrische Pulse umgewandelt. Diese elektrischen Pulse werden dann gezählt. Die Gammastrahlung wird je nach Füllstand/Grenzstand/Dichte/Durchsatz gedämpft. Dadurch ändert sich die Pulsrate. Die Amplituden der erzeugten Pulse sind nicht konstant, sondern unterliegen statistischen Schwankungen, die auf den Szintillator und/oder PMT/APD/SPM zurückzuführen sind. Die Amplituden der Pulse reichen von Null bis zu einer Maximalamplitude. Die Maximalamplitude hängt von der Energie des einfallenden Gammaquants und damit von der Beschaffenheit des Strahlers, von dem es erzeugt wurde, ab.
Nach einer Verstärkung und/oder Filterung wird das vom PMT/APD/SPM ausgegebene Signal einer Diskriminatorstufe zugeführt, deren Zählrate ein Maß für den Füllstand, den Grenzstand, die Dichte bzw. den Durchsatz ist.
Es werden grundsätzlich alle Pulse gezählt, die über einer fest eingestellten oder einstellbaren Diskriminatorschwelle liegen. Die Schwelle wird im Allgemeinen so gewählt, dass sich eine maximale Pulsrate bei bestmöglichem Signal-RauschVerhältnis ergibt. Weitere Informationen zur Pulsamplitude, Pulsdauer oder Pulsform werden nicht erfasst. Der Messwert ist von den Pulsamplituden abhängig.
Eine Erfassung des Pulsamplitudenspektrums ist in der Patentanmeldung EP 2 378 312 A1 beschrieben. Sie dient zu Diagnosezwecken.

Zusammenfassung der Erfindung

Es ist eine Aufgabe der Erfindung, die Genauigkeit der Messergebnisse von radiometrischen Messgeräten zu verbessern.
Diese Aufgabe wird durch die Merkmale der unabhängigen und nebengeordneten Ansprüche gelöst. Weiterbildungen der Erfindung ergeben sich aus den Unteransprüchen und der folgenden Beschreibung.
Ein erster Aspekt der Erfindung betrifft ein radiometrisches Messgerät, welches eine radiometrische Detektoreinheit und eine Auswerteeinheit aufweist. Die radiometrische Detektoreinheit ist zum Umwandeln von radioaktiver Strahlung in eine Folge von elektrischen Pulsen und zum Erfassen der Pulsfolge ausgeführt. Bei der radioaktiven Strahlung handelt es sich beispielsweise um ein oder mehrere Gammaquanten.
Es ist ein Analog/Digital-Wandler zum Digitalisieren von Abtastwerten, welche durch Abtasten der Folge elektrischer Pulse erhalten wurden, vorgesehen. Weiter ist ein Speicher zum Speichern der vom Analog/Digital-Wandler ausgegebenen digitalisierten Werte vorgesehen, sowie eine Auswerteeinheit zur Auswahl von im Speicher gespeicherten digitalisierten Werten und zum Vergleich der ausgewählten digitalisierten Werte mit ebenfalls im Speicher gespeicherten Referenzwerten, wobei die Auswerteeinheit ausgeführt ist, durch diesen Vergleich zu entscheiden, ob die ausgewählten digitalisierten Werte zur Bestimmung eines Füllstands, eines Grenzstands, einer Dichte oder eines Durchflusses heranzuziehen oder zu verwerfen sind.
Bei den Referenzwerten, die im Speicher hinterlegt sind, handelt es sich beispielsweise um bestimmte digitalisierte Werte, die das Messgerät im Zuge der Abtastung der Pulsfolge und anschließender Digitalisierung der Abtastwerte erzeugt hat. In anderen Worten handelt es sich bei den Referenzwerten um während der eigentlichen Messung erzeugte Werte. Beispiele hierfür sind Amplitudenwerte der einzelnen Pulse, Grenzwerte oder Schwellwerte der Amplitudenwerte (welche beispielsweise zur Einstellung von Filterfunktionen verwendet werden können), und die Häufigkeiten von Pulsen während bestimmter Messintervalle, Grenzwerte der Häufigkeiten). Wird durch den Vergleich beispielsweise festgestellt, dass die Häufigkeit der gemessenen Pulse in einem bestimmten Messintervall deutlich von der Häufigkeit in benachbarten Messintervallen abweicht, kann die Auswerteeinheit entscheiden, dieses Messintervall zu verwerfen, also nicht für die Berechnung des Füllstands, des Grenzstands, der Dichte oder des Durchflusses heranzuziehen.
Die Referenzwerte können aber auch Werte sein, die bereits vor der Messung im Speicher hinterlegt waren und bereits im Werk gespeichert wurden. Werkseitig gespeicherte Referenzwerte können beispielsweise geeignet sein, eine zu erwartende Pulsform zu definieren.

Es kann vorgesehen sein, dass sämtliche oben genannte Referenzwerte im Speicher hinterlegt sind. Insbesondere können während der Messung immer wieder neue Referenzwerte hinzukommen.

Gemäß einer Ausführungsform der Erfindung bildet zumindest eine erste Teilmenge der digitalisierten Werte ein Amplitudenspektrum der Folge elektrischer Pulse ab. In anderen Worten kann aus der ersten Teilmenge (oder aus allen digitalisierten Werten) das Amplitudenspektrum gewonnen werden.

Gemäß einer Ausführungsform der Erfindung bildet zumindest eine zweite Teilmenge der digitalisierten Werte eine Häufigkeit der Pulse in aufeinanderfolgenden Zeitintervallen ab.

Gemäß einer Ausführungsform der Erfindung bildet zumindest eine dritte Teilmenge der digitalisierten Werte die Form zumindest eines der Pulse ab.

Gemäß einer Ausführungsform der Erfindung ist die Auswerteeinheit zum Bestimmen der Form des Pulses und zum Vergleich der bestimmten Form des Pulses mit der Form eines Referenzpulses sowie zur Anpassung der Form des Pulses an die Form des Referenzpulses ausgeführt, wenn die bestimmte Form des Pulses von der Form des Referenzpulses abweicht.

Die Auswerteeinheit dient demnach dem Bestimmen der Form des Pulses und dem Vergleich der von der Auswerteeinheit bestimmten Pulsform mit der Form eines im radiometrischen Messgerät gespeicherten Referenzpulses. Die Auswerteeinheit ist darüber hinaus zur Kompensation eines Messfehlers des Messgeräts ausgeführt, wenn die bestimmte Pulsform von der Form des Referenzpulses um mehr als einen vorbestimmbaren Schwellwert abweicht.

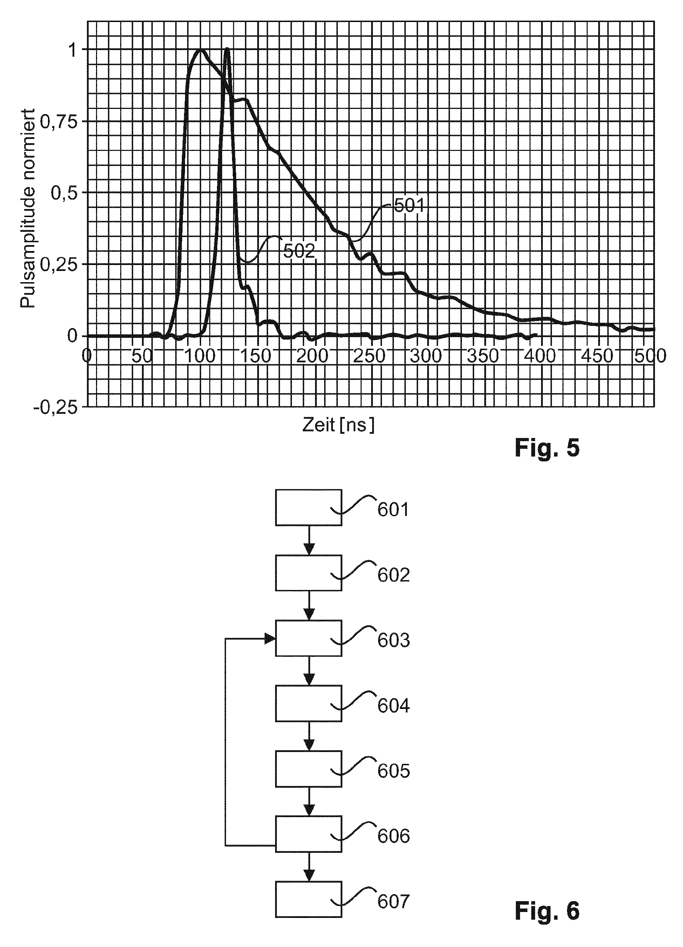

Um die "Stärke" dieser Abweichung zu bestimmen, können mathematische Verfahren eingesetzt werden, beispielsweise Kreuzkorrelation. Bei einem weiteren, ähnlichen und zur Anwendung vorgesehenen Verfahren wird das Integral des auf Einheitsamplitude normierten Pulses berechnet und mit dem Integral des Referenzpulses (der beispielsweise ebenfalls auf Einheitsamplitude normiert ist) verglichen. Bei hoher Ähnlichkeit oder Gleichheit der Pulse liegt das Verhältnis der Integrale nahe oder bei 1. (siehe hierzu auch Fig.5)

Die Pulsform kann sich beispielsweise ändern, wenn es zu einer Änderung der Temperatur der Detektoreinheit, und insbesondere des Szintillators kommt. Solche Temperaturdriften können zu Verstärkungsänderungen und somit zu Änderungen sowohl in der Häufigkeitsverteilung als auch in der Form der gemessenen Pulse führen. Hierdurch kann sich eine Verfälschung der Messergebnisse ergeben, welche erfindungsgemäß beseitigt (kompensiert) werden kann.

Ein wichtiger Aspekt einer Ausführungsform der Erfindung ist es, dass Hardwarefunktionen (Filterung, Verstärkung, Diskriminierung) in die Software verlagert werden.

Gemäß einer Ausführungsform der Erfindung handelt es sich bei dem Messgerät um ein Füllstandmessgerät, ein Grenzstandmessgerät, ein Dichtemessgerät oder ein Durchsatzmessgerät.

Gemäß einer weiteren Ausführungsform der Erfindung ist die Auswerteeinheit ausgeführt, die Kompensation des Messfehlers durch eine Anpassung mindestens eines elektrischen Parameters der radiometrischen Detektoreinheit durchzuführen. Eine Veränderung der Pulsamplitude durch Temperatureinfluss am PMT/APD/SPM kann beispielsweise durch Veränderung der Verstärkung von PMT/APD/SPM über eine Änderung der Betriebsspannung kompensiert werden, so dass die Diskriminatoren wieder korrekte Zählraten liefern. Weiterhin besteht die Möglichkeit, die Schaltschwellen der Diskriminatoren zu ändern. Dies erfolgt dann im selben Maß wie die Änderung der Pulsamplituden.

In einer weiteren Ausführungsform der Erfindung ist die Auswerteeinheit ausgeführt, die Kompensation des Messfehlers rechnerisch durchzuführen. Wie im vorigen Abschnitt beschrieben, kann durch Änderung elektrischer Parameter beispielsweise eine Änderung der Pulsamplitude kompensiert werden. Da der Auswerteeinheit die zur Steuerung der elektrischen Parameter notwendigen Informationen sowieso vorliegen (müssen), werden die Kompensationsmaßnahmen intern durch Verrechnung durchgeführt, ohne die elektrischen Parameter zu verändern. Die Pulsamplitude beispielsweise kann durch einfache Multiplikation mit einem geeigneten Faktor angepasst werden. Die Verstärkung der externen Detektorschaltung braucht dann nicht geändert zu werden.

Gemäß einer weiteren Ausführungsform der Erfindung ist die Auswerteeinheit ausgeführt, die Richtigkeit der Anpassung (und somit der Kompensation eines andernfalls zu erwartenden Messfehlers) zu überprüfen. Hierfür vergleicht sie nach der Anpassung des mindestens einen elektrischen Parameters der radiometrischen Detektoreinheit die Form des (danach) neu erzeugten Pulses mit der Form des gespeicherten Referenzpulses. Erst bei einer hinreichend guten Übereinstimmung der beiden Pulsformen geht sie von einer ausreichenden Kompensation des Messfehlers aus.

Andernfalls kann, gemäß einer weiteren Ausführungsform der Erfindung, die Auswerteeinheit den mindestens einen elektrischen Parameter erneut anpassen, was letztendlich zu einem iterativen Prozess führen kann.

Gemäß einer weiteren Ausführungsform der Erfindung weist die radiometrische Detektoreinheit einen Szintillator und einen nachgeschalteten Photomultiplier oder eine nachgeschaltete Avalanche-Photodiode auf.

Gemäß einer weiteren Ausführungsform der Erfindung ist das Messgerät zum Abtasten zumindest eines Pulses der Pulsfolge ausgeführt. Es weist einen Analog-Digital-Wandler auf, der dem Abtasten und Digitalisieren des Pulses dient. Die Auswerteeinheit ist ausgeführt, diese digitalen Abtastwerte zur Bestimmung der Pulsform heranzuziehen. Die Schaltung kann so ausgelegt sein, dass der Mikrocontroller die Abtastrate steuert und die vom AD-Wandler gelieferten Werte im Speicher ablegt. Es ist aber auch möglich, dass der AD-Wandler die Abtastwerte direkt im Speicher ablegt. Dies kann z.B. notwendig sein, um höhere Abtastraten zu erzielen, die über den Umweg Mikrocontroller nicht realisierbar wären.

Gemäß einer Ausführungsform der Erfindung wird die Form des Pulses alleine durch die Pulsamplitude und die Pulsdauer des Pulses bestimmt. Es handelt sich also nicht um eine genaue Bestimmung der Pulsform, sondern lediglich um eine Charakterisierung des Pulses durch Messung von dessen maximaler Amplitude und Breite. Die Breite kann beispielsweise die Halbwertsbreite des Pulses sein (also die Pulsbreite an der Stelle, an der der Puls auf die Hälfte seiner maximalen Amplitude abgefallen ist) oder beispielsweise die Breite an der Stelle, auf der der Puls auf 10 % seiner maximalen Amplitude oder einen anderen Wert abgefallen ist. Diese Art der Bestimmung der "Pulsform" spart Rechenzeit und Speicherplatz.

Gemäß einer weiteren Ausführungsform der Erfindung ist die Auswerteeinheit ausgeführt, anhand der bestimmten Pulsform (wie oben ausgeführt, kann es sich bei der "Pulsform" auch um das Verhältnis von Amplitude und Pulsbreite handeln) zu entscheiden, ob es sich bei dem Puls um einen messungsrelevanten Nutzpuls, einen Dunkelpuls, einen durch elektromagnetische Beeinflussung in der Auswerteeinheit erzeugten Puls (sog EMV-Puls), oder um einen anderen parasitären Puls handelt. Daraufhin kann die Auswerteeinheit dafür sorgen, dass der Dunkelpuls bzw. der EMV-Puls (bzw. der parasitäre Puls) erst gar nicht in das Messergebnis mit einfließt.

Die durch Fremdstrahlung erzeugten und als solche erkannten Pulse werden also zur Bestimmung des Messwertes nicht herangezogen oder es wird zumindest deren Einfluss auf das Messergebnis (den Messwert) herausgerechnet. Bei den oben und im Folgenden genannten Messwerten kann es sich um den Füllstand, den Grenzstand, die Dichte oder den Durchsatz (Durchfluss) des zu vermessenden Mediums handeln.

Gemäß einer weiteren Ausführungsform der Erfindung ist die Auswerteeinheit zur Kompensation eines von einer Fremdstrahlung hervorgerufenen Messfehlers durch Auswertung eines Pulsamplitudenspektrums ausgeführt.

So kann das Messgerät das Spektrum der von der radioaktiven Strahlung erzeugten Pulse bestimmen und anhand dieses Spektrums erkennen, ob es ausschließlich durch die vom Messstrahler erzeugte radioaktive Strahlung hervorgerufen wird, oder ob sich Fremdstrahlung hineingemischt hat. Diese ungewünschten Anteile im Pulsspektrum, die durch die Fremdstrahlung hervorgerufen wurden, können identifiziert werden und bleiben dann bei der Berechnung des Messergebnisses unberücksichtigt. Dies ermöglicht auch eine nachfolgende rechnerische Korrektur des Messergebnisses.

Vorzugsweise wird immer das komplette Spektrum betrachtet. Einen gemessenen Einzelpuls wird beispielsweise dann direkt einem Fremdisotop zugeordnet, wenn dessen Amplitude größer ist als die mit dem Nutzisotop maximal mögliche.

Die Berechnung der Anteile von Nutz- und Fremdstrahlung durch Auswertung des Pulsamplitudenspektrums kann wie folgt erfolgen:

Aus den strahlerspezifischen Amplitudenspektren der vom Strahler ausgesendeten Strahlung ist ersichtlich, dass die verschiedenen Pulsamplituden nicht gleichmäßig verteilt sind. Sie weisen je nach Isotop Maxima an unterschiedlichen Stellen auf. Bei einer Messung ergibt sich ein Summenamplitudenspektrum, das sich aus den Anteilen mindestens eines Nutzstrahlers und ein oder mehreren Fremdstrahlern zusammensetzt. Natürlich ist es auch möglich, dass keine oder nur geringe Fremdstrahlung vorhanden ist, die die Messung nicht wesentlich beeinflusst. Durch geschickte Wahl zweier (oder mehrerer) Punkte im Amplitudenspektrum können die Anteile jedes Strahlers an der Pulsrate berechnet werden.

Beispiel mit zwei Punkten (1 und 2) und einem Fremdstrahler:

$n_{gesamt1}$ = Gesamtzählrate im Punkt 1
$n_{gesamt2}$ = Gesamtzählrate im Punkt 2
$n_{Nutz1}$ = Anteil Nutzstrahlung im Punkt 1
$n_{Fremd1}$ = Anteil Fremdstrahlung im Punkt 1
$n_{Nutz2}$ = Anteil Nutzstrahlung im Punkt 2
$n_{Fremd2}$ = Anteil Fremdstrahlung im Punkt 2

$$Q_{Nutz} = n_{Nutz1} / n_{Nutz2} = \text{konstant} = \text{Verhältnis Zählraten Nutzstrahler in Punkt 1 und 2.}$$

$$Q_{Fremd} = n_{Fremd1} / n_{Fremd2} = \text{konstant} = \text{Verhältnis Zählraten Fremdstrahler in Punkt 1 und 2.}$$

$Q_{Nutz}$ und $Q_{Fremd}$ sind unabhängig vom aktuellen Messwert und können aus den spezifischen Pulsamplitudenspektren abgeleitet werden.

Beispiel für die Wahl der Punkte 1 und 2 für hohe Genauigkeit:

Punkt 1: $n_{Nutz1} \ll n_{Nutz2}$ d.h. niedriger Nutzstrahlungsanteil und hoher Fremdstrahlungsanteil.
Punkt 2: $n_{Nutz1} \gg n_{Nutz2}$ d.h. hoher Nutzstrahlungsanteil und niedriger Fremdstrahlungsanteil.

Es ergibt sich folgendes Gleichungssystem:

$$n_{gesamt1} = n_{Nutz1} + n_{Fremd1}$$

$$n_{gesamt2} = n_{Nutz2} + n_{Fremd2}$$

$$Q_{Nutz} = n_{Nutz1} / n_{Nutz2}$$

$$Q_{Fremd} = n_{Fremd1} / n_{Fremd2}$$

$n_{gesamt1}$, $n_{gesamt2}$, $Q_{Nutz}$ und $Q_{Fremd}$ sind bekannt, die Nutzzählrate kann berechnet werden.

Die Kenntnis der Art des Fremdstrahlers ist bei der Ermittlung des Nutz- und des Fremdstrahlungsanteils nützlich, aber nicht unbedingt notwendig.

Gemäß einer weiteren Ausführungsform der Erfindung ist die Auswerteeinheit ausgeführt, aus der bestimmten Form des Pulses die Temperatur der radiometrischen Detektoreinheit (und insbesondere des Szintillators) zu bestimmen und daraufhin einen mit der Temperatur zusammenhängenden Messfehler zu kompensieren bzw. zu korrigieren oder (falls die Bestimmung der Temperatur vor der Messergebnisberechnung stattfindet), den Messfehler erst gar nicht auftreten zu lassen.

Für diese Kompensation kann die Auswerteeinheit beispielsweise eine Eichkurve heranziehen, welche die Abhängigkeit des Messfehlers von der Temperatur angibt. Diese Eichkurve kann in einer Speichereinheit des Messgeräts gespeichert sein.

Ein weiterer Aspekt der Erfindung betrifft ein Verfahren zum Verringern oder Kompensieren eines Messfehlers eines radiometrischen Messgeräts. Zunächst erfolgt ein Umwandeln von radioaktiver Strahlung in eine Folge elektrischer Pulse, gefolgt von einem Abtasten der Folge elektrischer Pulse und einem Digitalisieren der durch das Abtasten erhaltenen Abtastwerte. Diese digitalisierten Werte werden dann gespeichert. Bestimmte im Speicher gespeicherte Werte werden dann ausgewählt und mit ebenfalls im Speicher gespeicherten Referenzwerten verglichen. Danach wird entschieden, ob die ausgewählten digitalisierten Werte zur Bestimmung eines Füllstands, eines Grenzstands, einer Dichte oder eines Durchflusses heranzuziehen oder zu verwerfen sind. Hierdurch wird das Messergebnis verbessert.

Auch kann ein Vergleich der Pulsform eines oder mehrerer Pulse der Pulsfolge mit der Form eines Referenzpulses erfolgen, woraufhin eine Kompensation eines zu erwartenden Messfehlers des Messgeräts erfolgt, der andernfalls auftreten würde, wenn die bestimmte Pulsform von der Form des Referenzpulses zumindest merklich abweicht.

Gemäß einem weiteren Aspekt der Erfindung ist ein Programmelement angegeben, das, wenn es auf einem Prozessor eines radiometrischen Messgeräts ausgeführt wird, das Messgerät anleitet, die oben und im Folgenden beschriebenen Schritte durchzuführen.

Gemäß einem weiteren Aspekt der Erfindung ist ein computerlesbares Medium angegeben, auf dem ein oben beschriebenes Programmelement gespeichert ist.

An dieser Stelle sei darauf hingewiesen, dass alle hier und im Folgenden beschriebenen Verfahrensschritte in dem Messgerät implementiert werden können. Umgekehrt können Merkmale, die oben und im Folgenden im Hinblick auf das Messgerät beschrieben werden, auch als Verfahrensschritte implementiert werden.

Es kann als ein Aspekt der Erfindung angesehen werden, dass die gemessenen Pulse abgetastet, digitalisiert und gespeichert werden, nachdem sie vom PMT/APD/SPM verstärkt wurden. Aus diesen Daten kann dann eine rechnerische Ermittlung des Messwerts stattfinden, bei der Störsignale ausgeblendet, verworfen oder kompensiert werden können. Die Form der Pulse kann zu Diagnosezwecken eingesetzt werden, beispielsweise um eine Temperaturdrift des Strahlungsdetektors zu identifizieren. Die Kompensation des Messfehlers kann beispielsweise über die Steuerung elektrischer Parameter der Beschaltung des radiometrischen Detektors erfolgen. Darüber hinaus ist eine Fremdstrahlungskompensation durch Auswertung des Pulsamplitudenspektrums möglich.

Im Folgenden werden mit Verweis auf die Figuren Ausführungsbeispiele der Erfindung beschrieben.

Kurze Beschreibung der Figuren

Fig. 1A zeigt ein Messgerät.

Fig. 1B zeigt eine Folge von Pulsen, die mit dem Messgerät der Fig. 1 A aufgezeichnet wurde.

Fig. 1C zeigt, gegenüber Fig. 1B zeitlich gedehnt, die Form eines von dem Messgerät der Fig. 1A aufgezeichneten Pulses.

Fig. 2A zeigt eine Diskriminatorschaltung.

Fig. 2B zeigt ein Amplitudenspektrum, das mit der Diskriminatorschaltung der Fig. 2A aufgezeichnet wurde.

Fig. 3 zeigt ein Messgerät gemäß einem Ausführungsbeispiel der Erfindung.

Fig. 4 zeigt verschiedene Pulsformen.

Fig. 5 zeigt verschiedene Pulsformen.

Fig. 6 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich.

Werden in der folgenden Figurenbeschreibung gleiche Bezugsziffern verwendet, so bezeichnen diese gleiche oder ähnliche Elemente. Gleiche oder ähnliche Elemente können aber auch durch unterschiedliche Bezugsziffern bezeichnet sein.

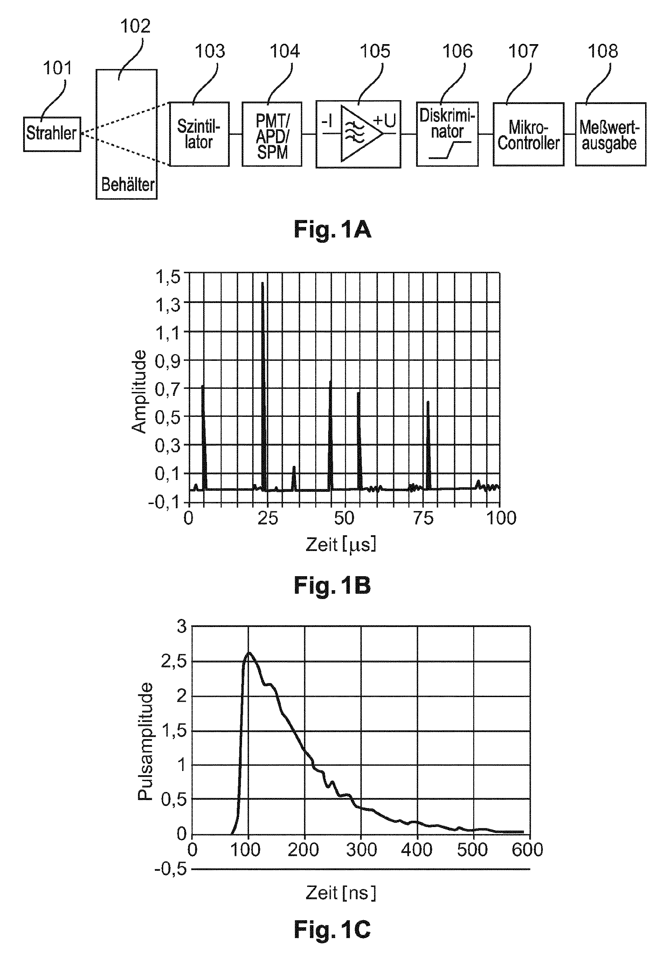

Fig. 1A zeigt ein radiometrisches Messgerät. Das Messgerät, bei dem es sich beispielsweise um ein radiometrisches Füllstandmessgerät, ein radiometrisches Dichtemessgerät, ein radiometrisches Grenzstandmessgerät oder ein radiometrisches Durchsatzmessgerät handelt, weist einen radioaktiven Strahler 101 auf, der den Behälter 102, der mit einem Füllgut gefüllt ist, durchstrahlt. Hinter dem Behälter befindet sich ein radiometrischer Detektor, bei dem es sich um einen Szintillator 103 und einen daran angeschlossenen PMT, APD oder SPM 104 handelt. Am Ausgang von PMT/APD/SPM 104 befindet sich ein Verstärker 105.

Der Szintillator 103 wandelt Gammastrahlung in Lichtpulse mit variabler Intensität um. Der Szintillationsvorgang kann durch den Comptoneffekt oder den Photoeffekt ausgelöst werden. Die Intensitätsverteilung der so entstehenden Lichtpulse ist durch das Szintillationsmaterial festgelegt und somit bekannt.

Nach dem Verstärker 105 kann der Signalverlauf der resultierenden Pulse abgegriffen und analysiert werden. Hierfür sind beispielsweise ein oder mehrere Diskriminatoren 106 vorgesehen. Am Ausgang des Diskriminatorbauteils 106 befindet sich ein Mikroprozessor oder Mikrocontroller 107, der die notwendigen Berechnungen vornimmt und dessen Ausgang an die Messwertausgabe 108 angeschlossen ist.

Fig. 1B zeigt eine mögliche Amplitudenverteilung (Spektrogramm) der von dem Messgerät erfassten Pulse. Wie oben ausgeführt ist das Spektrogramm charakteristisch für den Szintillator.

Fig. 1C zeigt eine mögliche Form eines von dem Messgerät erfassten Pulses. Die typische Pulsdauer beträgt in etwa 400 ns, kann aber auch länger oder kürzer sein.

Die Form des Pulses hängt von der Art des radioaktiven Strahlers 101 ab.

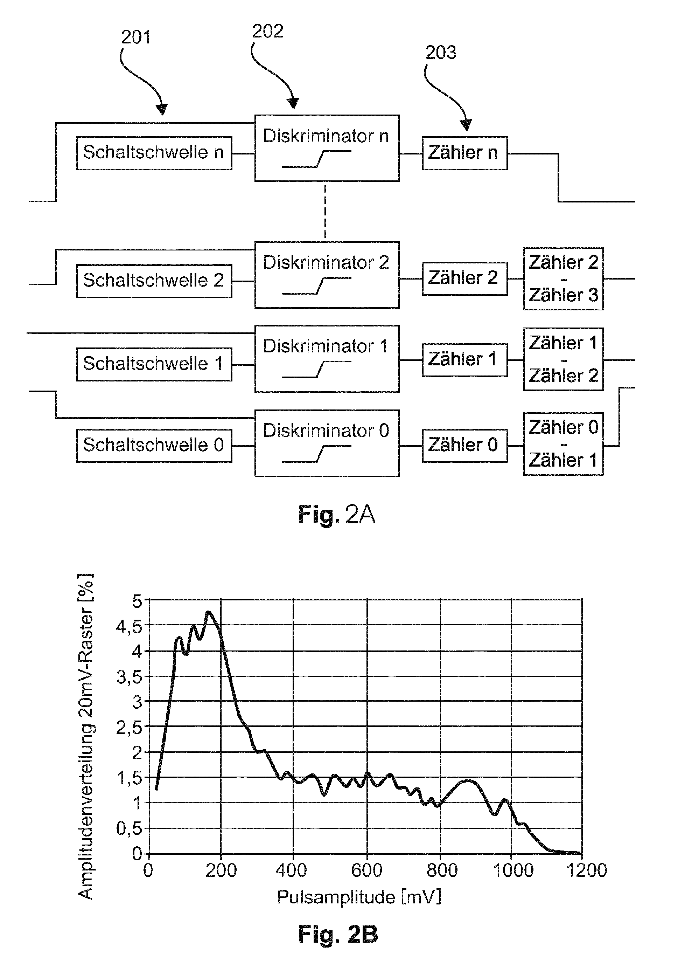

Durch die Verwendung von zwei oder mehr Diskriminatorstufen mit unterschiedlichen Schaltschwellen (siehe Fig. 2A) kann eine bestimmte Verstärkungsregelung (z. B. zur Temperaturkompensation) und/oder eine Diagnoseeinrichtung realisiert werden. Dabei wird ausgenutzt, dass die Pulsamplituden zwar statistisch verteilt sind, deren jeweilige Häufigkeiten jedoch in einem festen Verhältnis zueinander stehen.

Weiterhin kann eine Fremdstrahlungserkennung und Fremdstrahlungskompensation durchgeführt werden. Das Auftreten von Fremdstrahlung kann bei radiometrischen Messungen ein Problem darstellen. Sofern es sich z. B. um eine konstante natürliche Hintergrundstrahlung handelt, kann diese bei der Messung durch Abgleich kompensiert werden. Sporadisch auftretende oder sich ändernde Fremdstrahlung kann jedoch nicht ohne weiteres erkannt werden. Ein Ansatz, das Problem zu umgehen, ist, ein Kontrollgerät einzubauen, das nicht von der regulären Messung, sondern nur von der Fremdstrahlung beeinflusst wird. Fremdstrahlung kann dadurch erkannt und bei der Berechnung des Messwerts berücksichtigt werden. Falls die Detektoren des Mess- und des Kontrollgeräts an unterschiedlichen Stellen angeordnet sind, sind sie nicht stets derselben Fremdstrahlung ausgesetzt, was zu einem fehlerhaften Ergebnis führen kann.

Eine beispielsweise durch eine Temperaturänderung oder eine Alterung des Szintillators oder anderer elektronischer Bauteile hervorgerufene Änderung der Pulsamplituden und damit der Zählrate kann zur Erzielung einer verbesserten Messgenauigkeit bei der Ermittlung des Messwerts durch eine Änderung der elektronischen Verstärkung und/oder der Diskriminatorschwellen kompensiert werden. Die Verstärkung von PMT/APD/SPM ist von deren Versorgungsspannung abhängig und kann durch ein Verändern der Versorgungsspannung gesteuert werden. Diese Methode wird vorzugsweise genutzt, da die Änderung der Verstärkung des Verstärkers mit einem erhöhten Schaltungsaufwand verbunden sein kann. Die Temperaturkompensation kann auch durch Aufnehmen einer Temperaturkennlinie bei bekanntem Messwert und späterer Verrechnung bei der jeweiligen Messung erfolgen.

Wie bereits beschrieben ist die Pulsamplitude abhängig von der Energie der Gammaquanten. Die Energieverteilung in der Gammastrahlung wiederum ist charakteristisch für einen radioaktiven Strahler. Im Zusammenwirken mit Szintillatormaterial und nachgeschaltetem Lichtdetektor ergibt sich eine für die jeweilige Kombination aus Isotop/Gammadetektor typische Verteilung der Pulsamplituden.

Dieser Effekt kann ausgenutzt werden, indem mittels "Multichannel Analyzer (MCA)" ein Amplitudenspektrum ermittelt wird. Ein MCA besitzt, anstatt einer oder zwei, eine Vielzahl von Diskriminatorstufen (siehe Spalte 202 in Fig. 2A), welche unterschiedliche Schaltschwellen 201 aufweisen, und deren Ausgänge mit jeweils einem Zähler 203 verbunden sind. Aus der sich ergebenden Amplitudenverteilung kann eindeutig auf das radioaktive Isotop geschlossen werden.

Dabei gilt: Schaltschwelle 0 < Schaltschwelle 1 < Schaltschwelle 2 < ... < Schaltschwelle n. Das bedeutet, dass, falls ein Diskriminator ein Schaltsignal ausgibt, auch alle darunter liegenden Diskriminatoren ein Schaltsignal ausgeben. Durch eine Differenzbildung kann die Anzahl der Pulse in einem Diskriminatorintervall ermittelt werden.

Der Kurvenverlauf ist von der Szintillatorbeschaffenheit, dem PMT/APD/SPM-Verhalten und von der Auflösung der Diskriminatorintervalle abhängig.

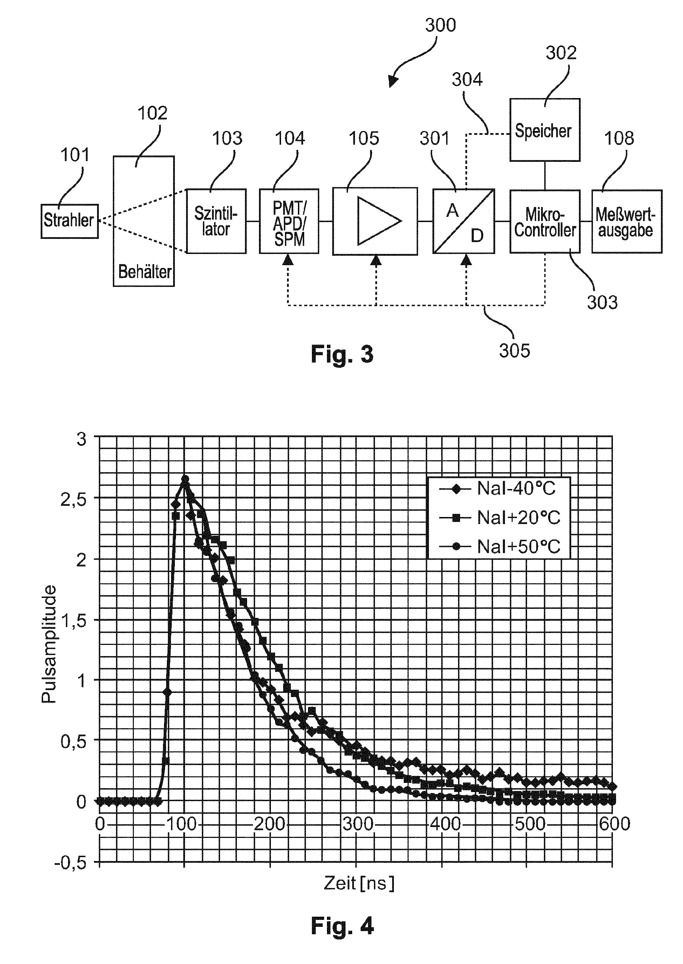

Die Ermittlung des Amplitudenspektrums (ein Beispiel hierfür ist in der Fig. 2B zu sehen) kann auch ohne hardwaremäßig aufgebauten MCA softwaregesteuert erfolgen. Die mittels Spitzenwertdetektor und einem Analog-Digital-Wandler 301 (siehe Fig. 3) festgestellten Pulsamplituden werden einem Rechner (Auswerteeinheit) zugeführt, mit dem dann das Spektrogramm ermittelt und dargestellt werden kann. Vorteil dieser Lösung ist, neben dem geringeren Schaltungsaufwand, dass die Größe der Diskriminatorintervalle beliebig gewählt und auch nachträglich noch variiert werden kann.

Es ist aber auch möglich, das komplette von PMT/APD/SPM 104 kommende Signal abzutasten, zu digitalisieren und abzuspeichern. Ein entsprechendes Messgerät ist in Fig. 3 gezeigt. Damit liegen alle Informationen zu Pulsraten, -amplituden, -dauern, -formen und -verteilungen vor, und es kann eine rechnerische Auswertung des Messsignals erfolgen.

Der in Fig. 3 gezeigte Signalpfad 305 zeigt die Verbindung zwischen dem Mikroprozessor 303 des Messgeräts und PMT/APD/SPM 104, Verstärker 105 und Analog-Digital-Wandler 301. Der Mikroprozessor 303 kann die Parameter aller drei Baugruppen einstellen, um die oben und im Folgenden beschriebene Kompensation von Messfehlern durchzuführen. Darüber hinaus ist ein Speicher 302 vorgesehen, der an den Mikroprozessor 303 und, über die Signalleitung 304, an den Analog-Digital-Wandler 301 angeschlossen ist, um die digitalen Abtastwerte zu speichern. Neben den Amplitudenwerten der einzelnen Pulse können auch weitere Abtastwerte der einzelnen Pulse gespeichert werden. Auch die Form der Referenzpulse kann in diesem Speicher hinterlegt sein.

Die Filterung, der Verstärkungsfaktor und die "Diskriminatorschwellen" sind nicht hardwaremäßig festgelegt, sondern über die Programmierung des Messgeräts definiert und können über den Signalpfad 305 geändert werden.

Die Parameter der Einheiten 104, 105, 301 können dann frei gewählt und optimal angepasst werden. Insbesondere ist es möglich, dasselbe Signal (also dieselben im Speicher gespeicherten digitalen Werte, die aus der erfassten Pulsfolge gewonnen wurden) mit unterschiedlichen Parametern auszuwerten und die Ergebnisse zu vergleichen.

Es kann auch ein Vergleich mit einem abgespeicherten Referenzsignalverlauf (Pulsform oder Amplitudenspektrum) durchgeführt werden, z. B. mittels Kreuzkorrelation. Mit diesem mathematischen Verfahren ist es möglich zu berechnen, in welchem Maß zwei Signale einander ähnlich sind. Werden mehrere Signalkurven gespeichert, dann können diese untereinander verglichen werden.

Ein weiterer Vorteil ist, dass auch Pulse getrennt werden können, die einander überlagern und auch mit der MCA-Methode nicht als Einzelpuls erkannt werden können. Die Überlagerung von Pulsen nimmt bei größer werdenden Zählraten zu. Mittels statistischer Methoden kann dieser Effekt kompensiert werden. Ein Beispiel hierfür ist in Glen F.Knoll, "Radiation Detection and Measurement", Fourth Edition, angegeben. Genauere Ergebnisse kann die Analyse des Signalverlaufs liefern.

Im Folgenden ist unter dem Begriff der Digitalisierung die Abtastung des Signals (also des Pulses) mit anschließender Analog-Digital-Wandlung und Speicherung als Folge digitaler Abtastwerte zu verstehen.

Auch bei bekannter und konstanter Gammastrahlung kann eine Veränderung der Pulsform beobachtet werden, welche beispielsweise durch eine Änderung der Detektortemperatur oder durch Alterungserscheinungen hervorgerufen werden kann. Die Pulse von beispielsweise NaI werden zu tieferen Temperaturen hin in der Amplitude kleiner und zeitlich länger. Ohne Kompensationsmaßnahmen würde der Messwert verfälscht.

Durch Auswertung der Pulsform ist es aber möglich, den Temperaturgang des Szintillators zu erkennen und zu kompensieren. Im folgenden Diagramm der Fig. 4 sind die Pulsformen bei Verwendung eines NaI-Szintillators mit PMT dargestellt. Für bessere Vergleichbarkeit sind die Pulse mit gleicher Amplitude eingezeichnet.

Die Pulsform ist nicht von der Pulsamplitude abhängig und auch unabhängig von der Energie der Gammastrahlung. Beispielsweise durch Vergleich mit gespeicherten Referenzpulsen kann die Temperatur der Detektoreinheit ermittelt und daraufhin eine Korrektur der Messung vorgenommen werden. Diese Korrektur kann sowohl rein rechnerisch als auch durch Anpassung der elektrischen Parameter der Sensorbeschaltung (also der Beschaltung der Elemente 104, 105, 301) erfolgen. Der Vergleich mit Referenzpulsen kann auch zur Überprüfung der korrekten Funktion des Szintillators und/oder von PMT/APD/SPM dienen.

Es ist nicht in jedem Fall notwendig, einen Puls komplett zu digitalisieren und abzuspeichern. Bei einem vereinfachten Verfahren werden lediglich die maximale Pulsamplitude und die Pulsdauer z. B. bei 10 % der Maximalamplitude des Pulses ermittelt und zueinander ins Verhältnis gesetzt. Dieses Verhältnis ist ein Indikator dafür, ob eine Temperaturdrift vorliegt oder beispielsweise ein Fehler des radiometrischen Detektors besteht. Dieses Verfahren ist insbesondere dort interessant, wo aufgrund der Kostenunterschiede oder elektrischen Leistungsaufnahme keine schnelle Analog-Digital-Wandler und große Speicher eingesetzt werden können.

Weiterhin ist es möglich, Dunkelpulse von Nutzpulsen zu unterscheiden. Die Erzeugung von Dunkelpulsen ist ein parasitärer Effekt von PMT/APD/SPM und unabhängig vom Szintillator.

Die Dunkelpulsrate und die Dunkelpulsamplitude sind von Bauform, Betriebsspannung, Temperatur und Alterung von PMT/APD/SPM abhängig. Hinzu kommen Exemplarstreuungen. Die Dunkelpulsrate ist in der Regel nicht bekannt und kann die Messung verfälschen.

Da die Dunkelpulse im Vergleich zum Großteil der Nutzpulse nur eine kleine Amplitude haben, können sie in vielen Anwendungen durch eine Erhöhung der Schaltschwelle leicht ausgeblendet werden, ohne dass Messgenauigkeit und/oder Messgeschwindigkeit nennenswert schlechter werden.

Allerdings kann es für bestimmte Anwendungen vorteilhaft sein, die Pulsausbeute zu maximieren. Die zusätzlich gewonnene Zählrate kann dann in zusätzliche Genauigkeit und/oder Geschwindigkeit umgesetzt werden. Auch kann auf diese Weise ein Strahler mit niedriger Anfangsaktivität gewählt werden oder der verwendete Strahler kann trotz seiner mit der Zeit abnehmenden Aktivität länger verwendet werden, bevor er ausgetauscht werden muss.

In Fig. 5 sind ein von einem NaI-Szintillator stammender Puls 501 und ein von einer PMT erzeugter Dunkelpuls 502 dargestellt.

Mittels mathematischer Vergleichsverfahren (beispielsweise einer Kreuzkorrelation) kann der Dunkelpuls als Fremdpuls erkannt und verworfen werden und geht damit nicht in die Berechnung des Messwerts ein. Auch hier ist die komplette Digitalisierung des Signals nicht unbedingt erforderlich, denn die Pulsdauern von Dunkelpulsen und Nutzpulsen unterscheiden sich eindeutig. So ist der Dunkelpuls bei gleicher Amplitude deutlich schmäler als der Nutzpuls.

Weiterhin können auf diese Weise durch elektromagnetische Beeinflussung in der Auswerteelektronik erzeugte Pulse erkannt werden, da diese in der Regel eine andere Form als die Nutzpulse aufweisen.

Es gibt Anwendungen, wo durch hohe Dämpfung des Lichts im Szintillator die Lichtpulse sehr klein werden. Es ist daher in diesem Falle notwendig, eine niedrige Schaltschwelle zu haben, um vom Szintillatorende herrührende Lichtpulse detektieren zu können. Dies ist beispielsweise bei den Geräten des Typs "FIBERTRAC" der Fa. VEGA der Fall, bei denen der Szintillator aus einem Bündel von szintillierenden Lichtwellenleitern besteht. Die maximale Länge des Lichtwellenleiters, bei der noch eine vernünftige Messung möglich ist, liegt momentan bei 7 m. Allerdings ist es bei diesem Szintillator so, dass dessen Lichtpulse sehr viel kürzer sind als die mit NaI erzeugten Lichtpulse, so dass sie nicht von den Dunkelpulsen unterschieden werden können. Es ist aber möglich Störpulse, die z. B. durch elektromagnetische Beeinflussung entstanden sind, auszublenden (zu kompensieren bzw. herauszurechnen).

Bei einem weiteren Ansatz macht man sich den oben beschriebenen Sachverhalt zunutze, dass ein radioaktiver Strahler bei Verwendung eines bestimmten Szintillators und lichtempfindlichen Detektors ein spezifisches Amplitudenspektrum erzeugt. Dies kann, wie oben beschrieben, technisch genutzt werden, um den Nachweis radioaktiver Isotope zu erbringen. Im vorliegenden Fall sind der Nutzstrahler und damit das zu erwartende Pulsamplitudenspektrum bekannt. Ändert sich das gemessene Spektrum durch Fremdstrahlung, so kann der Anteil der Fremdstrahlung berechnet und der Messwert korrigiert werden. Man ist hierbei nicht darauf angewiesen, dass die Gammastrahlung des Nutzstrahlers eine größere Energie als die des Fremdstrahlers aufweist. Stammt andererseits die Fremdstrahlung vom gleichen radioaktiven Isotop wie die Nutzstrahlung, kann der Fremdstrahlungsanteil nicht ermittelt werden. In diesem Fall können als Nutzstrahler zwei verschiedene radioaktive Isotope verwendet werden, beispielsweise Cs-137 und Co-60. Auch dabei ergibt sich dann ein charakteristisches Gammaspektrum, aus dem der Anteil der Fremdstrahlung herausgerechnet werden kann.

Fig. 6 zeigt ein Flussdiagramm eines Verfahrens gemäß einem Ausführungsbeispiel der Erfindung. In Schritt 601 erfolgt ein Ausstrahlen von Gammaquanten (oder einer anderen radioaktiven Strahlung) von einer radioaktiven Quelle 101 (siehe Fig. 3) in Richtung Füllgutbehälter. In Schritt 602 treffen diese Gammaquanten auf einen Szintillator und werden in Lichtblitze umgewandelt, die von einem Photomultiplier oder einer Avalanche-Photodiode in elektrische Pulse umgewandelt werden. In Schritt 603 wird die Form zumindest eines dieser Pulse vermessen und in Schritt 604 wird die so bestimmte Pulsform mit der Form eines Referenzpulses verglichen. In Schritt 605 wird festgestellt, dass die beiden Pulsformen nicht hinreichend genau miteinander übereinstimmen (beispielsweise mittels eines mathematischen Verfahrens, wie Kreuzkorrelation), so dass in Schritt 606 der mit diesem Unterschied in den Pulsformen zusammenhängende Messfehler des radiometrischen Messgeräts kompensiert wird. Diese Schritte können mehrmals hintereinander erfolgen, bis die Form eines neu erfassten Pulses mit der Form des Referenzpulses hinreichend übereinstimmt. Diese hinreichende Übereinstimmung wird entweder schaltungstechnisch erreicht, indem die Parameter der einzelnen Bauteile bei der Kompensation des Messfehlers entsprechend eingestellt werden, oder rechnerisch, indem die gemessenen Pulsformen nach jeder Messung rechnerisch korrigiert werden, bevor die Pulse in die Auswertung zur Erstellung des Messergebnisses einfließen. Anschließend wir dann der korrigierte Messwert in Schritt 607 ausgegeben.

Ergänzend sei daraufhingewiesen, dass "umfassend" und aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radiometrisches Messgerät (300), aufweisend:

    eine radiometrische Detektoreinheit (103, 104, 105, 301) zum Umwandeln von radioaktiver Strahlung in eine Folge elektrischer Pulse;
    einen Analog/Digital-Wandler (301) zum Digitalisieren von Abtastwerten, welche durch Abtasten der Folge elektrischer Pulse erhalten wurden;
    einen Speicher (302) zum Speichern der vom Analog/Digital-Wandler ausgegebenen digitalisierten Werte;
    eine Auswerteeinheit (302, 303) zur Auswahl von im Speicher gespeicherten digitalisierten Werten und zum Vergleich der ausgewählten digitalisierten Werte mit ebenfalls im Speicher gespeicherten Referenzwerten;
    wobei die Auswerteeinheit ausgeführt ist, durch diesen Vergleich zu entscheiden, ob die ausgewählten digitalisierten Werte zur Bestimmung eines Füllstands, eines Grenzstands, einer Dichte oder eines Durchflusses heranzuziehen oder zu verwerfen sind.

2. Messgerät (300) nach Anspruch 1,
   wobei zumindest eine erste Teilmenge der digitalisierten Werte ein Amplitudenspektrum der Folge elektrischer Pulse abbildet.

3. Messgerät (300) nach Anspruch 1 oder 2,
   wobei zumindest eine zweite Teilmenge der digitalisierten Werte eine Häufigkeit der Pulse in aufeinanderfolgenden Zeitintervallen abbildet.

4. Messgerät (300) nach Anspruch einem der vorhergehenden Ansprüche,
   wobei zumindest eine dritte Teilmenge der digitalisierten Werte die Form zumindest eines der Pulse abbildet.

5. Messgerät (300) nach Anspruch einem der vorhergehenden Ansprüche,
   wobei die Auswerteeinheit (302, 303) zum Bestimmen der Form eines Pulses der Folge elektrischer Pulse und zum Vergleich der bestimmten Form des Pulses mit der Form eines Referenzpulses ausgeführt ist;
   wobei die Auswerteeinheit zur Anpassung der Form des Pulses an die Form des Referenzpulses ausgeführt ist, wenn die bestimmte Form des Pulses von der Form des Referenzpulses abweicht.

6. Messgerät (300) nach einem der vorhergehenden Ansprüche,
   wobei es sich bei dem Messgerät um ein Füllstandmessgerät, ein Grenzstandmessgerät, ein Dichtemessgerät oder ein Durchsatzmessgerät handelt.

7. Messgerät (300) nach Anspruch 5 oder 6,

wobei die Auswerteeinheit (302, 303) ausgeführt ist, die Anpassung der Form des Pulses an die Form des Referenzpulses und somit die Kompensation eines andernfalls auftretenden Messfehlers rechnerisch durchzuführen.

8. Messgerät (300) nach einem der Ansprüche 5 bis 7,
wobei die Auswerteeinheit (302, 303) ausgeführt ist, die Anpassung der Form des Pulses an die Form des Referenzpulses durch eine Anpassung mindestens eines elektrischen Parameters der radiometrischen Detektoreinheit (103, 104, 105, 301) durchzuführen.

9. Messgerät (300) nach Anspruch 8,
wobei die Auswerteeinheit (302, 303) ausgeführt ist, nach der Anpassung des mindestenes einen elektrischen Parameters der radiometrischen Detektoreinheit (103, 104, 105, 301) die Form eines neu erzeugten Pulses mit der Form des Referenzpulses zu vergleichen und erst bei Übereinstimmung der beiden Pulsformen von einer richtigen Anpassung auszugehen.

10. Messgerät (300) nach Anspruch 8 oder 9,
wobei die Auswerteeinheit (302, 303) ausgeführt ist, die Anpassung des mindestens einen elektrischen Parameters iterativ durchzuführen.

11. Messgerät (300) nach einem der Ansprüche 5 bis 10,
wobei die Form des Pulses alleine durch die Pulsamplitude und die Pulsdauer bestimmt wird.

12. Messgerät (300) nach einem der Ansprüche 5 bis 11,
wobei die Auswerteeinheit (302, 303) ausgeführt ist, anhand der bestimmten Form des Pulses zu entscheiden, ob es sich bei dem Puls um einen Dunkelpuls oder um einen durch elektromagnetische Beeinflussung in der Auswerteeinheit erzeugten Puls (EMV-Puls) handelt, woraufhin sie das Messergebnis entsprechend korrigiert, indem der Dunkelpuls bzw. der EMV-Puls nicht in das korrigierte Messergebnis mit einfließt.

13. Messgerät (300) nach einem der Ansprüche 5 bis 12,
wobei die Auswerteeinheit (302, 303) ausgeführt ist, aus der bestimmten Form des Pulses die Temperatur des radiometrischen Detektors zu bestimmen und daraufhin einen mit der Temperatur zusammenhängenden Messfehler zu kompensieren.

14. Verfahren zum Verringern eines Messfehlers eines radiometrischen Messgeräts (300), das Verfahren aufweisend die Schritte:

Umwandeln von radioaktiver Strahlung in eine Folge elektrischer Pulse;
Abtasten der Folge elektrischer Pulse;
Digitalisieren der durch das Abtasten erhaltenen Abtastwerte;
Speichern der vom Analog/Digital-Wandler ausgegebenen digitalisierten Werte;
Auswählen von im Speicher gespeicherten digitalisierten Werten;
Vergleichen der ausgewählten digitalisierten Werte mit ebenfalls im Speicher gespeicherten Referenzwerten;
Entscheiden, ob die ausgewählten digitalisierten Werte zur Bestimmung eines Füllstands, eines Grenzstands, einer Dichte oder eines Durchflusses heranzuziehen oder zu verwerfen sind.

15. Programmelement, das, wenn es auf einem Prozessor eines radiometrischen Mesgeräts (300) ausgeführt wird, das Messgerät anleitet, die folgenden Schritte durchzuführen:

Umwandeln von radioaktiver Strahlung in eine Folge elektrischer Pulse;
Abtasten der Folge elektrischer Pulse;
Digitalisieren der durch das Abtasten erhaltenen Abtastwerte;
Speichern der vom Analog/Digital-Wandler ausgegebenen digitalisierten Werte;
Auswählen von im Speicher gespeicherten digitalisierten Werten;
Vergleichen der ausgewählten digitalisierten Werte mit ebenfalls im Speicher gespeicherten Referenzwerten;
Entscheiden, ob die ausgewählten digitalisierten Werte zur Bestimmung eines Füllstands, eines Grenzstands, einer Dichte oder eines Durchflusses heranzuziehen oder zu verwerfen sind.

16. Computerlesbares Medium, auf dem ein Programmelement nach Anspruch 15 gespeichert ist.

**Fig. 1A**

**Fig. 1B**

**Fig. 1C**

201       202       203

| Schaltschwelle n | Diskriminator n | Zähler n |

| Schaltschwelle 2 | Diskriminator 2 | Zähler 2 | Zähler 2 - Zähler 3 |

| Schaltschwelle 1 | Diskriminator 1 | Zähler 1 | Zähler 1 - Zähler 2 |

| Schaltschwelle 0 | Diskriminator 0 | Zähler 0 | Zähler 0 - Zähler 1 |

**Fig.** 2A

**Fig. 2B**

**Fig. 3**

**Fig. 4**

Fig. 5

Fig. 6

Europäisches
Patentamt

European
Patent Office

Office européen
des brevets

# EUROPÄISCHER RECHERCHENBERICHT

Nummer der Anmeldung

EP 14 17 9520

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | US 2002/181662 A1 (PFLEGER MANFRED [DE])<br>5. Dezember 2002 (2002-12-05)<br>* Absätze [0011] - [0014], [0040],<br>[0047] - [0055]; Abbildungen 1,2,6,17 *<br>----- | 1,2,6,<br>10,14-16<br>3-5,7-9,<br>12,13 | INV.<br>G01F23/288<br>G01T1/17<br>G01F1/704<br>G01F1/712<br>G01N23/08 |
| X | DE 600 10 782 T2 (COMMISSARIAT ENERGIE ATOMIQUE [FR]) 2. Juni 2005 (2005-06-02)<br>* Absätze [0005], [0120] - [0128];<br>Abbildung 4 *<br>----- | 1,2,10,<br>11,14-16 | |
| Y | GB 2 316 744 A (SCHLUMBERGER LTD [US])<br>4. März 1998 (1998-03-04)<br>* Seite 1, Zeile 30 - Seite 2, Zeile 15 *<br>* Seite 8, Zeile 7 - Seite 10, Zeile 19;<br>Abbildungen 3-5 *<br>----- | 3-5,7-9,<br>12,13 | |

RECHERCHIERTE
SACHGEBIETE (IPC)

G01F
G01T
G01N

Der vorliegende Recherchenbericht wurde für alle Patentansprüche erstellt

| Recherchenort | Abschlußdatum der Recherche | Prüfer |
|---|---|---|
| München | 29. Januar 2015 | Papantoniou, E |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 9520

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2015

| Im Recherchenbericht angeführtes Patentdokument | Datum der Veröffentlichung | Mitglied(er) der Patentfamilie | Datum der Veröffentlichung |
|---|---|---|---|
| US 2002181662 A1 | 05-12-2002 | EP 1239303 A1<br>US 2002181662 A1 | 11-09-2002<br>05-12-2002 |
| DE 60010782 T2 | 02-06-2005 | DE 60010782 D1<br>DE 60010782 T2<br>EP 1037070 A1<br>FR 2790560 A1<br>JP 2000258536 A<br>US 6329651 B1 | 24-06-2004<br>02-06-2005<br>20-09-2000<br>08-09-2000<br>22-09-2000<br>11-12-2001 |
| GB 2316744 A | 04-03-1998 | AU 727032 B2<br>AU 3608997 A<br>BR 9704564 A<br>CA 2214231 A1<br>CN 1182883 A<br>EG 21438 A<br>GB 2316744 A<br>ID 18147 A<br>NO 973984 A<br>US 5884234 A | 30-11-2000<br>05-03-1998<br>03-11-1998<br>28-02-1998<br>27-05-1998<br>31-10-2001<br>04-03-1998<br>05-03-1998<br>02-03-1998<br>16-03-1999 |

EPO FORM P0461

Für nähere Einzelheiten zu diesem Anhang : siehe Amtsblatt des Europäischen Patentamts, Nr.12/82

EP 2 980 540 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2378312 A1